# EUROPEAN PATENT SPECIFICATION

(11) **EP 0 672 272 B1**
(45) Date of publication and mention of the grant of the patent: **05.08.1998**
(21) Application number: 94927026.8
(22) Date of filing: 27.09.1994
(51) Int. Cl.: G05D 16/06

(54) **CONTROL VALVE**
REGELVENTIL
SOUPAPE DE REGULATION

(30) Priority: 02.10.1993 GB 9320347
(43) Date of publication of application: 20.09.1995
(73) Proprietor: DELTA ENGINEERING HOLDINGS LTD., West Bromwich, West Midlands B70 9ER (GB)
(72) Inventor: DURRANT, David Kenneth, Hertfordshire AL7 1UQ (GB); TAYLOR, Peter John, Stafford, Staffordshire ST19 9AE (GB)
(74) Representative: Mosey, Stephen George
(86) International application number: GB9402096
(87) International publication number: WO9510079

(56) References cited:
- EP-A- 0 147 589
- DE-A- 3 108 418
- FR-A- 2 340 488
- GB-A- 2 086 010
- GB-A- 2 173 883
- US-A- 4 240 458

## Description

This invention relates to a control valve, a particular application of which is in an agricultural spraying machine.

Agricultural spraying machines are known which are intended to be carried on an operator's back, these being known as knapsack sprayers. In one form of knapsack sprayer the liquid to be sprayed is pressurised by the operator manually operating a pump. The disadvantage of this arrangement is that although at the start of the spraying operation the liquid is supplied to the spraying head at full pressure, the pressure drops as the spraying continues, with the result that uneven spraying of the crop occurs between each fresh pumping operation.

An object of the invention is to provide a control valve which, in one embodiment, can be used to overcome this disadvantage.

According to the invention, there is provided a control valve comprising a body, an inlet to said body, an outlet from said body, a fluid flow path through said body from the inlet to the outlet, there being in said flow path a pressure responsive element which in a first position directly or indirectly blocks said flow path, in use, the pressure responsive element moving to a second position to open, directly or indirectly, said flow path if the pressure thereon exceeds a first predetermined value, the pressure responsive element in said second position directly or indirectly allowing fluid to flow, in use, in said flow path until the pressure exerted thereon falls to said first predetermined value or to a second predetermined value below said first predetermined value.

Preferably the control valve comprises a regulator element downstream of said pressure responsive element to reduce the pressure of fluid allowed to flow, in use, by said pressure responsive element.

Desirably the pressure responsive element is a spring disc which is arranged adjacent a valve seat in the flow path and is movable by a positive snap action directly from said first position, where it blocks said flow path by its engagement on said seat, to said second position, where it is out of engagement with said seat.

Conveniently, in use, said spring disc remains in said first position until said fluid exerts a pressure on it which exceeds said first predetermined value, and remains in said second position until the pressure exerted by the fluid is at said second predetermined value, which is below the value of the regulated pressure of fluid in the flow path from the regulator element, in use.

Advantageously the regulator element is a resiliently biased valve head which co-operates with a further valve seat in the flow path to restrict flow of fluid past the further valve seat thereby to reduce its pressure downstream thereof.

The invention will now be described, by way of example, with reference to the accompanying drawings, in which:
Figure 1 is a schematic part-sectional side view through a valve of the invention connected to a liquid supply tube and an outlet spray nozzle of a liquid sprayer, the valve being shown in its closed position; and
Figure 2 shows the valve of Figure 1 in its open position.

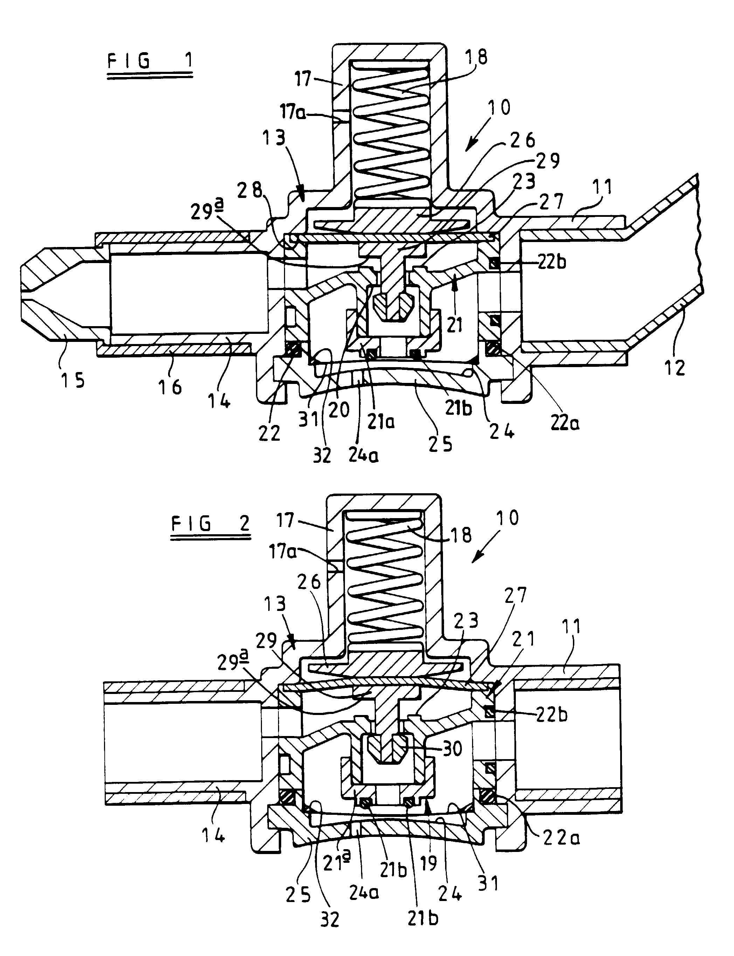

The embodiment of the invention shown in Figures 1 and 2 is intended particularly for use with an agricultural sprayer of the so-called knapsack type, where, as described in the introduction, an operator pressurises the liquid to be sprayed by a manual pumping operation. However other uses include sprayers mounted on tractors, by a boom or otherwise, and in paint spraying equipment. The valve is not limited to use with liquids. It could, for example, be used in an air compressor, with air flowing through it, in use, or it could be used with other gases.

Figure 1 shows a control valve 10 of the invention having an inlet connection 11 to which is schematically shown fitted a liquid supply tube or wand 12 along which the pressurised liquid to be sprayed is supplied. The inlet connection 11 is at one side of a body 13 of the valve, with an outlet connection 14 being provided at the opposite side, a spray nozzle 15 being shown secured to the outlet connection by means of a retaining nut 16 in a conventional manner. For clarity screw threads are not shown in the drawings, and it will be understood that the means of connecting the nozzle and the wand could be by any suitable means other than those shown.

The interior of the body 13, which is preferably of plastics material, such as acetal, is formed with an upper housing part 17 which receives a compression spring 18. Within the body, between the inlet and the outlet connections is a chamber within which is defined a liquid flow path. Within this flow path are two valve seat arrangements 19, 20, respectively both formed, in one embodiment, on an insert 21 fitted in the internal chamber of the body with an O-ring seal 22a at its lower periphery and a further O-ring seal 22b at the inlet to the chamber. In another embodiment, as shown in the drawings, a separate member 21a is disposed on a downwardly depending central part of insert 21 to provide the valve seat 19. The member 21a can be adjustable to ensure correct opening and closing at the valve seat for different engagement members co-operating therewith. The valve seat on member 21a can be provided by a separate O-ring 21b, as shown, or could alternatively be provided by an equivalent downwardly depending integral annular part of member 21a.

The insert has a flat, and in this embodiment annular, surface 23 around the downstream side of the valve seat arrangement 20, whilst the annular valve seat arrangement 19 terminates slightly above a convex lower part-circular inner surface 24 of a separate lower closure part 25 of the body 13. A vent hole 24a extends from this surface 24 to the exterior of the body. The part 25, which can be a snap fit in the body 13, engages the O-ring seal 22, and holds the insert in place. Alternatively the part 25 can have four peripheral lugs and the body can have four corresponding slots, so that the lugs can be passed through the slots and the part 25 then turned to lock it against the seal 22.

Whilst one end of the spring 18 bears against an upper internal surface of the part 17 of the body, its other end bears against one side of a backplate 26, the opposite side of which bears against a diaphragm 27, the backplate and diaphragm being, in this example, circular. The diaphragm is held at its periphery between the insert 21 and an annular downwardly facing internal wall 28 of the body 13. The backplate may be separate from the diaphragm, integral therewith, or bonded thereto.

The diaphragm is, for example of plastics, such as low density polyethylene, or of rubber.

Depending from the side of the diaphragm opposite to that at which the backplate is disposed is a valve member 29 having a stem on the end of which is a head 30 which cooperates with the valve seat arrangement 20 to act as a restrictor or regulator to control the pressure of liquid as it flows between the valve member 29 and the valve seat arrangement 20. An upper annular shoulder 29a of member 29 can act as a stop surface, to prevent the spring 18 uncoiling, by engaging surface 23, which, as stated can be flat, or can be provided with pips. As shown, the head 30 is preferably a separate piece for ease of assembly.

Between the valve seat arrangement 19 and the surface 24, a circular spring disc 31 is fitted to the part 25, the periphery of the disc preferably being received on a suitable shoulder formed on part 25. It is held in place by sealant, such as silicone rubber, indicated at 32, around its peripheral top surface and peripheral edge, this also acting as a seal to prevent liquid passing to the lower side of the disc. The spring disc is of constant thickness and is convex at one side surface and correspondingly concave at its other side surface. The thickness of the disc is such that it is able to snap between two respective opposed overcentre positions, these being shown in Figures 1 and 2 respectively. In Figure 1 the disc is shown snapped into engagement with the valve seat arrangement 19, and having its upper surface convex, whilst in Figure 2 the other overcentre position is shown where the disc has snapped out of engagement with the valve seat arrangement 19 so as to be almost in engagement with the surface 24, its upper surface now being concave.

The shapes of the various parts of the valve, and also the materials of which they are made can be varied as required. However, in a preferred example the diaphragm is of low density polyethylene material. It could, however, be of "Viton" material. The selected material must have the necessary flexibility and chemical resistance. The disc 31 is 1 inch (2.54 cm) in diameter, with a thickness of between 10 and 15 thousandth of an inch (0.0254 and 0.0381 cm). In practice it has been found that a bimetallic snap disc is the most suitable, although a stainless steel or a plastics material spring disc may be a practical alternative. The strength of the spring 18 can, in one embodiment be pre-set so that its force on the backplate, diaphragm and valve member is fixed. Alternatively by means of a screw thread or the like this force could be adjustable.

Operation of the valve will now be described in relation to its use in a knapsack sprayer referred to.

Initially the valve would be in the position shown in Figure 1, with the spring disc 31 in engagement with its associated valve seat arrangement 19. In this state the spring 18 would be biasing the backplate and diaphragm downwardly to a position where part of the valve member 29 is either engaged against the surface 23 (or its pips), or spaced slightly therefrom as shown in Figure 1. In the first case, there is maximum spacing between the head 30 and the valve seat arrangement 20. Liquid flowing into the valve through the wand 12 enters the annular chamber defined around the part of the insert 21 defining the valve seat arrangement 19. However if the liquid entering is at a pressure below a predetermined value, the spring disc remains in engagement with its associated valve seat arrangement and the valve, in effect, remains closed without any leakage or dribbling of liquid from the nozzle at the valve outlet. This is due to the tight engagement of the spring disc 31 with its valve seat arrangement and also, if applicable, the engagement of part of the valve member 29 with the surface 23.

If the pressure of the supplied liquid is at or reaches this predetermined value, for example by the operator manually pumping the liquid container, the pressure of the liquid acting on the spring disc is such that it causes this disc to snap to its other overcentre position and thus out of engagement with its valve seat arrangement 19. Air between the spring disc 31 and the surface 24 is expelled through the vent hole 24a, if this is provided, or is otherwise merely compressed. As soon as the spring disc moves out of engagement with the valve seat arrangement 19, the pressurised liquid flows towards the valve seat arrangement 20, thereby forcing the valve member 29, diaphragm 27 and backplate 26 upwardly, to, for example, the Figure 2 position, against the force of the spring 18. Air is vented through a vent hole 17a in part 17. The upper part of the valve member 29 thus moves away from the surface 23 and pressurised liquid flows along the flow path defined in the chamber within the body and thence to the nozzle 15 at the outlet connection of the valve.

However, the upwards movement of the head 30 causes regulation of the fluid supplied by restriction at the opening between the valve seat 20 and surface 23, so that the pressure of the fluid passing through the valve seat arrangement 20 is reduced compared to its pressure which caused the disengagement of the spring disc 31 from its valve seat arrangement 19.

Typically a liquid pressure of approximately 21 to 23 Ibs per square inch (1.45 x 10⁵ to 1.59 x 10⁵ Newtons per square metre) would be required to cause the spring disc to snap out of engagement with the valve seat arrangement 19. However the pressure of such fluid would be regulated by the cooperation of the head 30 and valve seat arrangement 20 so that the pressure of fluid leaving the valve seat arrangement 20 would be reduced to approximately 15 Ibs per square inch (1.03 x 10⁵ Newtons per square metre).

The spring disc is such that once it is disengaged from the valve seat arrangement 20, it will remain in that position even though the pressure of supplied fluid may fall to below the pressure required to open it, and indeed to below the pressure of liquid regulated by the head 30 and valve seat arrangement 20. Indeed in one embodiment the spring disc will remain in its Figure 2 position until the pressure falls to approximately 11 Ibs per square inch (0.76 x 10⁵ per square metre). When the liquid pressure falls to this level, the spring disc snaps back into engagement with its associated valve seat arrangement 19 so that the valve is then closed and as before there is no leakage or dribbling of liquid. The valve will remain in this position until the operator again actuates the pump so as to raise the pressure of liquid to the valve to the value required to move the spring disc to its other overcentre position.

Instead of closing at a pressure below that required to open it, the spring disc would ideally open and close at the same pressure. However this is difficult to achieve in practice and there would normally, as described, be a difference in pressure between the open and closing values, with the smaller the difference the better. This pressure differential depends upon the disc design, i.e. its convexity, thickness and material. A harder disc would open at a higher pressure and would close earlier. The disc could be pre-stressed to achieve the required operation. A further alternative is the use of a spring or alternative biasing means behind the disc.

Moreover the restriction caused by the valve member head 30 and the valve seat arrangement 20 could be arranged to reduce the pressure at the outlet of the valve seat arrangement 20 to a value below that which would cause closing of the valve at the spring disc 31. However conveniently it is desirable that the regulator arrangement is set so that liquid can be supplied at a constant regulated pressure for a reasonably lengthy period of time, so that, for example, when spraying a field of crops a constant even supply of liquid may be supplied to the whole field, rather than with prior art arrangements where the liquid supplied is initially at a high pressure and finally at a much lower pressure resulting in uneven spraying. With the present arrangement there would normally be only a very short period at which the pressure of liquid being sprayed falls below the set level, for example 15 Ibs per square inch, before the valve closes, as a result of the pressure on the spring disc falling to, for example, 11 Ibs per square inch. It could of course be arranged that the valve would close as soon as the pressure of liquid at the spring disc fell below the 15 Ibs per square inch regulated value. It will be appreciated that the regulated value can be set by means of the spring and the shape and configurations, as well as the dispositions of the various parts of the valve member and cooperating valve seat arrangement. For example a longer or different pre-set spring could be used for regulating at a higher pressure, possibly with appropriate packing.

Accordingly a positive on-off control valve is provided which also enables suitable regulation of the supply pressure.

Instead of incorporating a regulator valve, the control valve can have this omitted, along with housing part 17, thereby operating merely as an anti-dribble valve. Moreover the control valve, with or without the regulator valve can be used and operate as a pressure relief valve.

## Claims

1. A control valve comprising a body, an inlet to said body, an outlet from said body, a fluid flow path through said body from the inlet to the outlet, there being in said flow path a pressure responsive element which in a first position directly or indirectly blocks said flow path, in use, the pressure responsive element moving to a second position to open, directly or indirectly, said flow path if the pressure thereon exceeds a first predetermined value, the pressure responsive element in said second position directly or indirectly allowing fluid to flow, in use, in said flow path until the pressure exerted thereon falls to said first predetermined value or to a second predetermined value below said first predetermined value.

2. A control valve as claimed in Claim 1, in which the pressure responsive element is a spring disc which is arranged adjacent a valve seat in the flow path and is movable by a positive snap action directly from said first position, where it blocks said flow path by its engagement on said seat, to said second position, where it is out of engagement with said seat.

3. A control valve as claimed in Claim 2, in which, in use, said spring disc remains in said first position until said fluid exerts a pressure on it which exceeds said first predetermined value, and remains in said second position until the pressure exerted by the fluid is at said second predetermined value, which is below the first predetermined value.

4. A control valve as claimed in Claim 2 or Claim 3, in which the spring disc is received at its periphery on a shoulder of the body.

5. A control valve as claimed in Claim 4, in which the shoulder is on a part of the body which is sealingly engaged with a separate main part of the body.

6. A control valve as claimed in Claim 4 or Claim 5, in which the spring disc is held in place on said shoulder by sealant at its periphery.

7. A control valve as claimed in any one of Claims 2 to 6, in which a chamber at a side of the spring disc remote from said valve seat has a vent hole for expulsion of air from the chamber when the spring disc moves to its second position.

8. A control valve as claimed in any one of Claims 1 to 7,
comprising a regulator element downstream of said pressure responsive element to reduce the pressure of fluid allowed to flow by said pressure responsive element.

9. A control valve as claimed in any one of Claims 2 to 7,
comprising a regulator element downstream of said pressure responsive element to reduce the pressure of fluid allowed to flow by said spring disc, the spring disc remaining in its first position until said fluid exerts a pressure on it, in use, which exceeds said first predetermined value, and remains in said second position until the pressure exerted by the fluid is at said second predetermined value, which is below the value of the regulated pressure of fluid in the flow path from the regulator element, in use.

10. A control valve as claimed in any one of Claims 2 to 7,
comprising a regulator element downstream of said pressure responsive element to reduce the pressure of fluid allowed to flow by said spring disc, the spring disc remaining in its first position until said fluid exerts a pressure on it, in use, which exceeds said first predetermined value, and remains in said second position until the pressure exerted by the fluid is at said second predetermined value, which is above the value of the regulated pressure of fluid in the flow path from the regulator element, in use.

11. A control valve as claimed in Claim 9 or Claim 10, in which the regulator element is a resiliently biased valve head which co-operates with a further valve seat in the flow path to restrict flow of fluid past the further valve seat thereby to reduce its pressure downstream thereof.

12. A control valve as claimed in Claim 11, in which the valve head is biased by a compression spring in a direction away from said further valve seat.

13. A control valve as claimed in Claim 12, in which the spring is of adjustable strength.

14. A control valve as claimed in any one of Claims 2 to 7 or Claims 9 to 13, wherein said valve seat is provided on an insert fitted in the body.

15. A control valve as claimed in Claim 11, wherein said valve seat and said further valve seat are provided on an insert fitted in the body.

16. A control valve as claimed in any one of Claims 2 to 7 or Claims 9 to 15, in which the spring disc is circular.

17. A control valve as claimed in any one of Claims 2 to 7 or Claims 9 to 16, in which the spring disc is bimetallic.

18. A control valve as claimed in any one of Claims 2 to 7 or Claims 9 to 16, in which the spring disc is of stainless steel.

19. A control valve as claimed in any one of Claims 2 to 7 or Claims 9 to 16, in which the spring disc is of plastics material.

20. A control valve as claimed in any one of Claims 2 to 7 or Claims 9 to 19, in which the spring disc is convex at one side surface and concave at the other side surface.

21. A control valve as claimed in any one of Claims 2 to 7 or Claims 9 to 20, in which the spring disc is of constant thickness.

## Patentansprüche

1. Regelventil mit einem Körper, einem Einlaß in den Körper, einem Auslaß aus dem Körper, einem Fluidströmungsweg durch den Körper von dem Einlaß zu dem Auslaß, wobei in dem Strömungsweg ein auf Druck reagierendes Element vorhanden ist, welches in einer ersten Stellung direkt oder indirekt den Strömungsweg sperrt und sich im Gebrauch in eine zweite Stellung bewegt, um direkt oder indirekt den Strömungsweg zu öffnen, falls der darauf wirkende Druck einen ersten vorgegebenen Wert überschreitet, wobei das auf Druck reagierende Element in der zweiten Stellung direkt oder indirekt im Gebrauch einem Fluid gestattet, in dem Strömungsweg zu fließen, bis der darauf ausgeübte Druck auf den ersten vorgegebenen Wert oder einen zweiten vorgegebenen Wert unterhalb des ersten vorgegebenen Wertes fällt.

2. Regelventil nach Anspruch 1, in welchem das auf Druck reagierende Element eine Federscheibe ist, welche benachbart einem Ventilsitz in dem Strömungsweg angeordnet und durch eine positive Schnappwirkung aus der ersten Stellung, in der es den Strömungsweg durch seine Anlage an dem Sitz sperrt, in die zweite Stellung, in welcher es mit dem Sitz außer Eingriff ist, bewegbar ist.

3. Regelventil nach Anspruch 2, in welchem die Federscheibe im Gebrauch in der ersten Stellung bleibt, bis das Fluid auf sie einen Druck ausübt, welcher den ersten vorgegebenen Wert überschreitet, und in der zweiten Stellung bleibt, bis der durch das Fluid ausgeübte Druck den zweiten vorgegebenen Wert hat, welcher unterhalb des ersten vorgegebenen Wertes liegt.

4. Regelventil nach Anspruch 2 oder Anspruch 3, in welchem die Federscheibe an ihrem Umfang an einer Schulter des Körpers aufgenommen ist.

5. Regelventil nach Anspruch 4, in welchem die Schulter auf einem Teil des Körpers vorhanden ist, welcher mit einem getrennten Hauptteil des Körpers abdichtend in Eingriff steht.

6. Regelventil nach Anspruch 4 oder Anspruch 5, in welchem die Federscheibe an ihrem Umfang durch Dichtungsmasse in der Stellung an der Schulter gehalten wird.

7. Regelventil nach einem der Ansprüche 2 bis 6, in welchem eine Kammer auf einer von dem Ventilsitz entfernt gelegenen Seite der Federscheibe ein Belüftungsloch zum Austreiben von Luft aus der Kammer bei Bewegung der Federscheibe in ihre zweite Stellung aufweist.

8. Regelventil nach einem der Ansprüche 1 bis 7, umfassend ein Regulierelement stromabwärts des auf Druck reagierenden Elements zur Verringerung des Drucks des Fluids, dem durch das druckabhängige Element gestattet ist, zu fließen.

9. Regelventil nach einem der Ansprüche 2 bis 7, umfassend ein Regulierelement stromabwärts des auf Druck reagierenden Elements, zur Verringerung des Drucks des Fluids, dem durch die Federscheibe gestattet ist, zu fließen, wobei die Federscheibe in ihrer ersten Stellung bleibt, bis das Fluid darauf im Gebrauch einen Druck ausübt, welcher den ersten vorgegebenen Wert überschreitet, und in der zweiten Stellung bleibt, bis der durch das Fluid ausgeübte Druck den zweiten vorgegebenen Wert hat, welcher unterhalb des Wertes des durch das Regulierelement im Gebrauch regulierten Fluiddrucks im Strömungsweg liegt.

10. Regelventil nach einem der Ansprüche 2 bis 7, umfassend ein Regulierelement stromabwärts des auf Druck reagierenden Elements zur Verringerung des Drucks des Fluids, dem durch die Federscheibe gestattet ist, zu fließen, wobei die Federscheibe in ihrer ersten Stellung bleibt, bis das Fluid darauf im Gebrauch einen Druck ausübt, welcher den ersten vorgegebenen Wert überschreitet, und in der zweiten Stellung bleibt, bis der durch das Fluid ausgeübte Druck den zweiten vorgegebenen Wert hat, welcher oberhalb des Wertes des durch das Regulierelement im Gebrauch regulierten Fluiddrucks im Strömungsweg liegt.

11. Regelventil nach Anspruch 9 oder Anspruch 10, in welchem das Regulierelement ein elastisch vorgespannter Ventilkopf ist, der mit einem weiteren Ventilsitz in dem Strömungsweg zusammenwirkt, um dadurch einen Fluidstrom vorbei an dem weiteren Ventilsitz zu begrenzen und dessen Druck stromabwärts davon zu reduzieren.

12. Regelventil nach Anspruch 11, in welchem der Ventilkopf durch eine Druckfeder in eine Richtung weggewandt von dem weiteren Ventilsitz vorgespannt ist.

13. Regelventil nach Anspruch 12, in welchem die Kraft der Feder einstellbar ist.

14. Regelventil nach einem der Ansprüche 2 bis 7 oder einem der Ansprüche 9 bis 13, wobei der Ventilsitz an einem in den Körper eingepaßten Einsatz vorgesehen ist.

15. Regelventil nach Anspruch 11, wobei der Ventilsitz und der weitere Ventilsitz an einem in den Körper eingepaßten Einsatz vorgesehen sind.

16. Regelventil nach einem der Ansprüche 2 bis 7 oder einem der Ansprüche 9 bis 15, in welchem die Federscheibe kreisförmig ist.

17. Regelventil nach einem der Ansprüche 2 bis 7 oder einem der Ansprüche 9 bis 16, in welchem die Federscheibe bimetallisch ist.

18. Regelventil nach einem der Ansprüche 2 bis 7 oder einem der Ansprüche 9 bis 16, in welchem die Federscheibe aus rostfreiem Stahl besteht.

19. Regelventil nach einem der Ansprüche 2 bis 7 oder einem der Ansprüche 9 bis 16, in welchem die Federscheibe aus Kunststoffmaterial besteht.

20. Regelventil nach einem der Ansprüche 2 bis 7 oder einem der Ansprüche 9 bis 19, in welchem die Federscheibe an einer Oberflächenseite konvex und an der anderen Oberflächenseite konkav ist.

21. Regelventil nach einem der Ansprüche 2 bis 7 oder einem der Ansprüche 9 bis 20, in welchem die Federscheibe von konstanter Dicke ist.

## Revendications

1. Soupape de commande comprenant un corps, un orifice d'entrée dans le corps, un orifice de sortie du corps, un passage destiné au fluide, traversant le corps, allant de l'orifice d'entrée à l'orifice de sortie, un élément réagissant à la pression étant présent dans le passage destiné au fluide et, dans une première position, bloquant directement ou indirectement le passage destiné au fluide, en cours d'utilisation, et l'élément réagissant à la pression se déplaçant dans une deuxième position pour ouvrir, directement ou indirectement, le passage destiné au fluide si la pression qui s'exerce sur lui est supérieure à une première valeur prédéterminée, l'élément réagissant à la pression, dans la deuxième position, permettant directement ou indirectement au fluide de s'écouler, en cours d'utilisation, dans le passage destiné au fluide, jusqu'à ce que la pression exercée sur lui retombe à la première valeur prédéterminée ou à une deuxième valeur prédéterminée inférieure à la première valeur prédéterminée.

2. Soupape de commande selon la revendication 1, dans laquelle l'élément réagissant à la pression est un disque élastique monté de façon adjacente à un siège de soupape, dans le passage destiné au fluide, et est susceptible de se déplacer, par une action d'enclenchement positif, directement de la première position, dans laquelle il bloque le passage par son appui sur le siège, dans la deuxième position, dans laquelle il est dégagé du siège.

3. Soupape de commande selon la revendication 2, dans laquelle, en cours d'utilisation, le disque élastique reste dans la première position jusqu'à ce que le fluide exerce une pression sur lui qui soit supérieure à la première valeur prédéterminée, et reste dans la deuxième position jusqu'à ce que la pression exercée par le fluide soit égale à la deuxième valeur prédéterminée, qui est inférieure à la première valeur prédéterminée.

4. Soupape de commande selon la revendication 2 ou la revendication 3, dans laquelle le disque élastique est reçu, à sa périphérie, sur un épaulement du corps.

5. Soupape de commande selon la revendication 4, dans laquelle l'épaulement se trouve sur une partie du corps qui coopère de façon étanche avec une partie principale séparée du corps.

6. Soupape de commande selon la revendication 4 ou la revendication 5, dans laquelle le disque élastique est maintenu en place sur l'épaulement par un matériau d'étanchéité à sa périphérie.

7. Soupape de commande selon l'une quelconque des revendications 2 à 6, dans laquelle une chambre, d'un côté du disque élastique éloigné du siège de soupape, présente un orifice de purge pour expulser l'air de la chambre lorsque le disque élastique passe dans sa deuxième position.

8. Soupape de commande selon l'une quelconque des revendications 1 à 7, comprenant un élément régulateur en aval de l'élément réagissant à la pression, pour réduire la pression du fluide que l'élément réagissant à la pression laisse s'écouler.

9. Soupape de commande selon l'une quelconque des revendications 2 à 7, comprenant un élément régulateur en aval de l'élément réagissant à la pression, pour réduire la pression du fluide que le disque élastique laisse s'écouler, le disque élastique restant dans sa première position jusqu'à ce que le fluide exerce une pression sur lui, en cours d'utilisation, qui est supérieure à la première valeur prédéterminée, et reste dans sa deuxième position jusqu'à ce que la pression exercée par le fluide soit égale à la deuxième valeur prédéterminée, qui est inférieure à la valeur de pression régulée du fluide dans le passage pour fluide, à partir de l'élément régulateur, en cours d'utilisation.

10. Soupape de commande selon l'une quelconque des revendications 2 à 7, comprenant un élément régulateur en aval de l'élément réagissant à la pression, pour réduire la pression du fluide que le disque élastique laisse s'écouler, le disque élastique restant dans sa première position jusqu'à ce que le fluide exerce une pression sur lui, en cours d'utilisation, qui est supérieure à la première valeur prédéterminée, et reste dans sa deuxième position jusqu'à ce que la pression exercée par le fluide soit égale à la deuxième valeur prédéterminée, qui est supérieure à la valeur de pression régulée du fluide dans le passage pour fluide, à partir de l'élément régulateur, en cours d'utilisation.

11. Soupape de commande selon la revendication 9 ou la revendication 10, dans laquelle l'élément régulateur est une tête de soupape sollicitée élastiquement qui coopère avec un autre siège de soupape placé dans le passage pour fluide pour restreindre l'écoulement de fluide le long de l'autre siège de soupape, afin de réduire sa pression en aval de celui-ci.

12. Soupape de commande selon la revendication 11, dans laquelle la tête de soupape est sollicitée par un ressort de compression dans une direction qui l'éloigne de l'autre siège de soupape.

13. Soupape de commande selon la revendication 12, dans laquelle la résistance du ressort peut être réglée.

14. Soupape de commande selon l'une quelconque des revendications 2 à 7 ou selon les revendications 9 à 13, dans laquelle le siège de soupape est formé sur un insert monté dans le corps.

15. Soupape de commande selon la revendication 11, dans laquelle le siège de soupape et l'autre siège de soupape sont formés sur un insert monté dans le corps.

16. Soupape de commande selon l'une quelconque des revendications 2 à 7 ou selon les revendications 9 à 15, dans laquelle le disque élastique est circulaire.

17. Soupape de commande selon l'une quelconque des revendications 2 à 7 ou selon les revendications 9 à 16, dans laquelle le disque élastique est bimétallique.

18. Soupape de commande selon l'une quelconque des revendications 2 à 7 ou selon les revendications 9 à 16, dans laquelle le disque élastique est constitué en acier inoxydable.

19. Soupape de commande selon l'une quelconque des revendications 2 à 7 ou selon les revendications 9 à 16, dans laquelle le disque élastique est constitué en matière plastique.

20. Soupape de commande selon l'une quelconque des revendications 2 à 7 et selon les revendications 9 à 19, dans laquelle le disque élastique est convexe d'un côté et concave de l'autre côté.

21. Soupape de commande selon l'une quelconque des revendications 2 à 7 ou selon les revendications 9 à 20, dans laquelle le disque élastique est d'épaisseur constante.
